# EUROPEAN PATENT SPECIFICATION

(11) **EP 2 086 459 B1**
(45) Date of publication and mention of the grant of the patent: **19.08.2015**
(21) Application number: 07848161.1
(22) Date of filing: 21.11.2007
(51) Int. Cl.: A61C 19/00, A61G 15/16

(54) **SUPPORT DEVICE USED IN CONNECTION WITH DENTAL CARE UNIT**
IN VERBINDUNG MIT EINER ZAHNPFLEGEEINHEIT VERWENDETE UNTERSTÜTZUNGSVORRICHTUNG
DISPOSITIF SUPPORT UTILISÉ CONJOINTEMENT AVEC UN APPAREIL DE SOINS DENTAIRES

(30) Priority: 21.11.2006 FI 20065739
(43) Date of publication of application: 12.08.2009
(73) Proprietor: PLANMECA OY, 00880 Helsinki (FI)
(72) Inventor: FRÖJDMAN, Jan, 01150 Söderkulla (FI)
(86) International application number: PCT/FI2007/050628
(87) International publication number: WO 2008/062100

(56) References cited:
- EP-A1- 0 185 229
- DE-A1- 19 501 027
- DE-A1- 19 650 134
- FR-A1- 2 002 735
- JP-A- 09 084 810
- US-A- 3 160 379
- US-A- 3 436 046
- US-A- 4 714 222
- US-A- 5 547 375

## Description

The present invention relates to a support device for use in connection with a dental care unit as defined in the preamble of claim 1.

In particular, the invention concerns the structure of supporting arms or corresponding support devices used in connection with a dental care unit. A dental care unit typically comprises e.g. a treatment chair, a body part of the dental care unit and various other functional devices and implements used in dental care work. A dental care unit is generally provided with at least one instrument console, which is used to store different hand instruments used by a dentist, such as dental drills and instruments designed for the treatment of teeth and dental fillings or for the curing of dental filling material. A dental care unit often also comprises a second console or holder for storing suction instruments and other implements. Such a console may be arranged in a position permitting so-called four-handed working. A dental care unit may likewise be provided with e.g. an operation light and other accessories, such as various trays on which one can deposit implements and materials needed in patient care.

An instrument console, suction console, operation light, trays and other corresponding utensils are generally connected to the dental care unit via support arms in a manner allowing them to be moved to different positions within the working place. In addition, many instruments are connected to the dental, care unit by instrument hoses fitted to supply the instruments e.g. with operating power, such as electricity or compressed air, from the dental care unit. Prior art knows arm structures that allow a tray, a device or other implement supported by the arm to be moved in at least two dimensions so that the utensil supported by the arm remains in essentially the same orientation in all situations.

One prior-art solution comprises a support arm consisting of several individual members hingedly joined together, as illustrated in Fig. 3 of patent specification JP 2006167358. Support arms of this type, consisting of a plurality of different members and joints, are complicated in construction and therefore quite susceptible to failure. Also, maintaining a sufficient level of hygiene of such support arms may be difficult.

Another prior-art support arm type is a so-called parallelogram mechanism, which generally consists of two parallel arms. A utensil attached to the end of a parallelogram mechanism can be moved in a plane so that the utensil remains in the same orientation regardless of position of the parallelogram mechanism. An example of such a solution is disclosed in patent specification EP0593791. In this specification, Fig. 1 shows a device which is connected to a dental care unit via a parallelogram mechanism and which can be moved upwards or downwards relative to the patient chair. In respect of arm system applications for dental care units, one of the drawbacks of the parallelogram mechanism is that when the plane of motion permitted by it lies in the same direction with the axis of the arm, the utensil arranged at the end of the arm can only be moved e.g. either up and down or left and right, but this construction in itself does not permit the utensil to be moved in both of these directions. Considering a dental care environment in a situation where the arm is a hindrance for other work, e.g. a mere large degree of freedom of up-down motion of the arm does not necessarily permit the arm to be moved away from the working point to a position where it would not hamper other actions.

The object of the present invention is to provide new solutions to the drawbacks referred to above and to produce a simple and economical support device designed for use in connection with a dental care unit. The support device of the invention is characterized by what is disclosed in the characterizing part of claim 1. Correspondingly, certain preferred embodiments of the invention are characterized by what is disclosed in the other claims.

One of the advantages of the solution of the invention and its preferred embodiments is that the invention enables the utensil connected to the support device to be moved in both up-down and lateral directions and at the same time so that the distance of the utensil from the dental care unit remains constant. The support device of the invention can be implemented as a simple structure and in a manner allowing relatively easy cleaning, i.e. as a hygienic structure requiring essentially no maintenance. In a preferred embodiment of the invention, a holding device comprised to the support device may consist of e.g. a hose made of a suitable material, in which case, in addition to its primary function according to the inverition - which is to maintain the orientation of the utensil connected to the support device regardless of the position of the support device - the holding device can be assigned an additional functionality, such as use as a suction hose included in the suction system of the dental care unit. The solution of the invention also enables the utensil connected to the support device to be placed in symmetrical positions relative to the point of attachment of the support device. This property can be utilized when the dental care unit is to be arranged so as to allow both right and left-handed working in a symmetrical manner.

In the context of the present application, the term "utensil" refers to any device, console, tray or other auxiliary table or other corresponding accessory connectable to the dental care unit by means of a support device.

In the following, the invention will be described in more detail by referring to a few examples of its preferred embodiments and to the attached drawings, wherein
Fig. 1 shows an oblique side view of a dental care unit in which a solution according to the invention is used,
Fig. 2 shows a side view of a support arm according to the invention functioning as a support device in a dental care unit, and
Fig. 3 shows a front view of a support arm according to the invention functioning as a support device in a dental care unit, arranged in different positions.

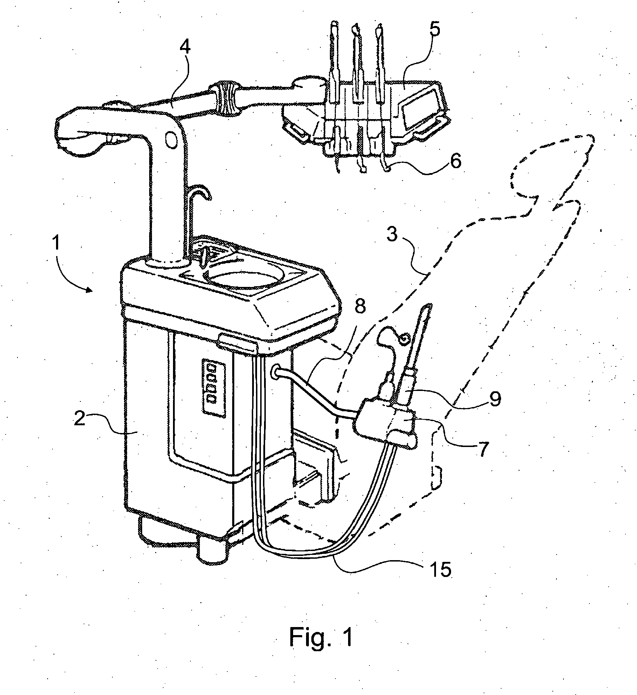

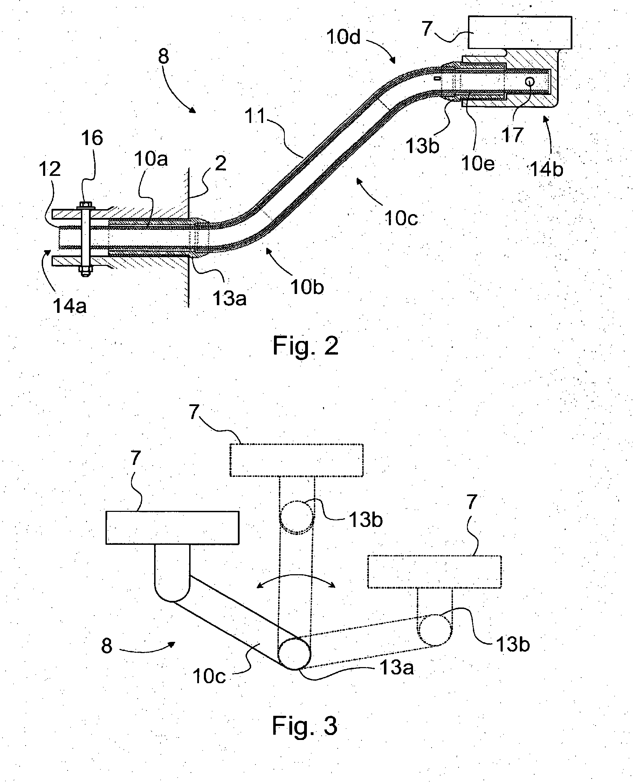

Fig. 1 is an oblique side view of a dental care unit applying the invention. The dental care unit 1 according to Fig. 1 comprises a body part 2, a patient chair 3, a console arm 4 connected by its first end to the body part 2, and an instrument console 5 connected to the second end of the console arm 4. Arranged in the instrument console 5 are hand instruments 6 used by a dentist. The physical quantities and control needed to operate the hand instruments 6 are received from the dental care unit 1. For example, electricity and compressed air can be supplied to the instruments 6 via hoses, wires and equivalent arranged inside the console arm 4. Connected to the dental care unit 1 according to Fig. 1 is also a suction console 7 by a support arm 8 functioning as a support device 8 according to the invention, which is presented in greater detail in the next Fig. 2. The first end 14a of the support arm 8 is connected to the body part 2 of the dental care unit by bearings or equivalent to permit rotation of the first end 14a of the support arm 8 about its central axis. The second end 14b of the support arm 8 is connected to the suction console 7 in a corresponding manner, thus allowing this second end 14b to be turned with respect to the point of attachment of the first end 14a. In Fig. 1, the suction console 7 is provided with two instruments 9 intended for use by a dental assistant, which are arranged to receive the required physical quantities via hoses 15 connected to the body part 2.

Figs. 1-3 show a support arm 8 according to a preferred embodiment of the invention, which is presented in Fig. 2 in sectioned side view. This support arm 8 has an essentially crank-like shape, such that its first and second ends 14a, 14b comprise substantially straight portions which extend in parallel directions and whose central axes (extensions of central axes) are located at a distance from each other. The essentially straight middle portion 10c of the crank-like support arm 8 is in an oblique position relative to the ends 14a, 14b of the arm. The structure of the support arm 8 can also be described by saying that it has at its first end 14a a straight initial portion 10a, after which the arm has a bend 10b, which is followed by a substantially straight middle portion 10c. After the middle portion 10c, the support arm 8 has a second bend 10d, which is essentially equal in magnitude to the first bend 10b but is curved in the opposite direction, and which is followed by a substantially straight final portion 10e. The initial portion 10a and final portion 10e of the support arm 8 extend in parallel directions, and the extensions of their central axes do not coincide with the same imaginary straight line, in other words, the central axes of the initial portion 10a and final portion 10e lie at a certain distance from each other, this distance being determined by the angle of the bends 10b and 10d and the length of the middle portion 10c.

The support arm 8 according to Fig. 2 is arranged to comprise a hollow and essentially rigid tube-like outer arm 11 and a hose-like inner arm 12, which is arranged inside the outer arm 11 and has an outer diameter suitably smaller than the inner diameter of the outer arm 11. In this embodiment of the invention, the inner arm 12 functions as a holding device 12 in a manner to be described in the following, and it as well may be implemented as a hollow structure.

The above-mentioned suitably smaller outer diameter here denotes that, as a result of this difference between the diameters, the inner arm 12 can be substantially easily placed inside the outer arm 11, but the difference must not be as large as to allow the hose-like inner arm 12 to undergo uncontrollable bending actions within the outer arm 11.

In Fig. 2, the first end 14a of the outer arm 11 of the support arm 8 is attached to a base, i.e. in this case to the body part 2 of the dental care unit, by means of a collar 13a, whereas the second end 14b of the support arm 8 is connected via a sleeve 13b to a utensil 7, in this case to a suction console 7. These joints permit the essentially straight end parts 10a, 10e of the support arm 8 to rotate with respect to the base 2 on the one hand and with respect to the utensil 7 on the other hand. The first end 14a of the inner arm 12 again is unrotatably fastened to the body part 2 of the dental care unit by an appropriate fastening element 16, while its second end 14b is unrotatably fastened to the utensil 7 by an appropriate fastening element 17. The purpose of the immovable fastening arrangement of the inner arm 12 is thus to keep the utensil 7 attached to the support arm 8 in the same orientation regardless of the position to which the support arm 8 is turned. Due to this functionality, the inner arm is in this context also referred to by the general designation holding device 12.

Thus, the embodiment of the invention illustrated in Fig. 2 functions in such a way that, when the first end 14a of the outer arm 11 is supported by a bearing, the support arm 8 can be rotated about the central axis of the initial portion 10a of the arm. When the arm is being rotated, the position of the final portion 10e of the support arm 8 changes in both vertical and horizontal directions due to the crank-like shape of the support arm 8. Since the final portion 10e of the outer arm 11 is also connected to the utensil 7 by a bearing and the inner arm 12 istorsion-resistant, the orientation of the utensil 7 does not change when the support arm 8 is being rotated. Thus, the vertical and horizontal positions of the utensil 7 attached to the second end 14b of the support arm 8 can be changed without changing the orientation of the utensil 7.

Fig. 3 is a simplified and schematic presentation of three different positions into which the support arm 8 has been turned. In all positions, the orientation of the utensil 7 remains the same regardless of the orientation of the middle portion 10c of the support arm 8. Thus, the position of e.g. a suction console 7 can be adjusted by raising and lowering the console 7 and moving it laterally, during which movements the support arm 8 turns about the central axis of its first end 14a while the suction console 7, due to the crank-like shape of the arm, still remains continuously at the same distance from the body part 2 of the dental care unit.

The outer arm 11 can be made e.g. from metal tube by bending. Depending on the utensil 7 to be used, the outer arm 11 has to be arranged to additionally support the weight of other utensils and devices that may be connected to the utensil 7. The inner arm 12 again may consist of e.g. a canvas hose formed from metallic braidings or a hose constructed from other similar material or materials that is torsion resistant but flexible, so that, according to a preferred embodiment of the invention, it can be fitted inside the crank-like outer arm 11.

The idea of the invention is thus to provide a support device 8 for use in connection with a dental care unit 1, which support device 8 is preferably of arm-like design and comprises at least a first end 14a, by which the support device 8 is connected to the dental care unit 1 or to a structure in connection with the dental care unit, and a second end 14b, which is arranged to support a utensil 7, such as a console, tray or an equivalent accessory. The second end 14b of the support device 8 is arranged to be rotatable at a distance from the first end 14a of the support device 8 with respect to the point of attachment of said first end 14a, and the support device 8 has a holding device 12 provided in connection with it, said holding device 12 being arranged to hold the aforesaid utensil 7 in essentially the same orientation in all positions of the second end 14b of the support device 8.

It is obvious to a person skilled in the art that different embodiments of the invention are not exclusively limited to the examples described above but may vary within the scope of the claims presented below. Thus, for example, the support device of the invention can be used as a supporting element for many purposes, such as connecting different devices, consoles and other accessories and utensils used in connection with dental care to a dental care unit. By using a hollow inner arm part in the support device, it can be utilized as a feedthrough for a compressed air line, a suction hose, electric wires or other corresponding means from the dental care unit to the utensil.

It is further obvious to a skilled person that the construction and shape of the support device may differ from the preferred embodiment of the invention described as an example above. On the other hand, the outer arm may also be made from some other sturdy material than metal, such as plastic, glass fiber, carbon fiber or other suitable material. The torsion-resistant function of the holding device can be achieved by using e.g. different articulated structures, such as a parallelogram mechanism structure. Further, the support device may also consist of an inner arm having a rigid and load-bearing construction and correspondingly an outer arm having a flexible and torsion-resistant construction, or the arms in question can be arranged to be positioned side by side. In addition, the portion between the parallelly orienting ends of the support arm needs not be straight nor even continuous, as long as it allows the virtual rotation axes located at a distance from each other to be functionally connected together.

Further, without deviating from the basic inventive concept, the support device can also be arranged to be rotatable with respect to the dental care unit and, on the other hand, to a console or equivalent at other parts than at its ends, too. Likewise, many other embodiments of the invention disclosed in the following claims but not described above are obvious to a skilled person.

## Claims

1. A support device (8) for use in connection with a dental care unit (1), said support device (8) comprising a first end (14a), by which the support device (8) is connected to the dental care unit (1) or to a structure attached to the dental care unit, and a second end (14b), which is arranged to support a utensil (7), such as a console, a tray or a corresponding other accessory, **characterized in that** said support device (8) comprises at said first and second ends (14a, 14b) an initial portion 10a and a final portion 10e, respectively, said initial and final portions (10a, 10b) extending parallel and their central axes being located at a distance from each other, said first end (14a) of the support device (8) being connected to the dental care unit (1) or to a structure in connection with the dental care unit by a structure which enables rotation of said first end (14a) whereby the second end (14b) of the support device (8) is rotatable at a distance from the first end (14a) of said support device (8) with respect to the point of attachment of said first end (14a) and to the utensil by a structure which enables revolving of the utensil (7) with respect to the support device (8), and **in that** a holding device (12) is provided in connection with the support device (8), said holding device (12) being arranged to hold the aforesaid utensil (7) in essentially the same orientation in all positions of the second end (14b) of the support device (8) by virtue of securing the holding device (12) in an essentially non-revolvable manner both to the dental care unit (1) or the structure in connection with the dental care unit and to the utensil (7).

2. The support device according to claim 1, **characterized in that** the first end (14a) of the support device (8) is connected to the dental care unit (1) or to a structure in connection with the dental care unit by bearings.

3. The support device according to claim 1 or 2, **characterized in that** the aforesaid utensil (7) is connected to the second end (14b) of the support device (8) by bearings.

4. The support device according to any one of the preceding claims, **characterized in that** the support device (8) is arranged to form a crank arm supporting the utensil (7).

5. The support device according to any one of the preceding claims, **characterized in that** the support device (8) comprises coaxial parts (11, 12) arranged to be revolvable relative to each other, out of which parts the other comprises the aforesaid holding device (12).

6. The support device according to any one of the preceding claims, **characterized in that** the support device (8) comprises an arm-like outer arm part (11) and the aforesaid holding device (12) is arranged inside it.

7. The support device according to any one of the preceding claims, **characterized in that** the support device (8) comprises an outer arm-like part (11) having a substantially crank-like structure such that the first and second ends (14a, 14b) of said arm-like part comprise essentially straight tube-like portions (10a, 10e), which extend in parallel and whose central axes are disposed at a distance from each other.

8. The support device according to any one of the preceding claims, **characterized in that** the support device (8) comprises an outer arm-like part (11) which is a substantially rigid, tube-like part arranged to support at least the weight of an utensil (7).

9. Support arm according to any one of the preceding claims, **characterized in that** the aforesaid holding device (12) is a substantially flexible and torsion-resistant hose, such as a hollow wire-cloth hose.

10. The support device according to any one of the preceding claims, **characterized in that** the aforesaid holding device (12) is provided with at least one lead-through for the passage of a pneumatic air line, a suction hose, electric wires or equivalent from the dental care unit (1) to the utensil (7).

11. The support device according to any one of the preceding claims, **characterized in that** the support device (8) comprises a rigid arm-like part and the aforesaid holding device (12), which are arranged side by side.

12. The support device according to any one of the preceding claims, **characterized in that** the support device (8) comprises a rigid arm-like part (11) and the aforesaid holding device (12), which are arranged coaxially relative to each other so that said arm-like part (11) is disposed inside the holding device (12).

13. The support device according to any one of the preceding claims, **characterized in that** the holding device (12) is a shaft of a parallelogram mechanism type structure.

14. Support device according to any one of the preceding claims, **characterized in that** the support device (8) is a suction arm and the utensil (7) is a suction console of the dental care unit.

## Patentansprüche

1. Stützvorrichtung (8) zur Benutzung in Verbindung mit einer zahnärztlichen Behandlungseinheit (1) umfassend
ein erstes Ende (14a) über das die Stützvorrichtung (8) mit der zahnärztlichen Behandlungseinheit (1), oder mit einer mit der Behandlungseinheit (1) verbundenen Struktur, verbunden wird und
ein zweites Ende (14b) angeordnet um ein Utensil (7), wie eine Konsole, eine Ablage oder entsprechendes Zubehör, zu halten, **dadurch gekennzeichnet, dass**
die Stützvorrichtung (8) einen Anfangsabschnitt (10a) und einen Endabschnitt (10e) an dem jeweiligen ersten und zweiten Ende (14a, 14b) aufweißt,
jene beiden Anfangs und Endabschnitte (10a, 10b) sich parallel erstrecken und ihre zentralen Achsen beabstandet sind,
das erste Ende (14a) der Stützvorrichtung (8) durch eine durch eine die Drehung des ersten Endes (14a) erlaubenden Struktur verbunden ist mit der zahnärztlichen Behandlungseinheit (1), oder mit einer mit der Behandlungseinheit (1) verbundenen Struktur, wobei
das zweite Ende (14b) der Stützstruktur (8) mittels eine Struktur, die die Drehung des zweiten Endes in Bezug auf die Stützstruktur erlaubt, in Bezug auf den Verbindungspunkt des ersten Endes sowie in Bezug auf das Utensil in einem Abstand zum ersten Ende drehbar ist,
eine Haltevorrichtung (12) mit in Verbindung mit der Stützstruktur (8) bereitgestellt wird,
die Haltevorrichtung (12) so angeordnet ist, dass das Utensil (7) im Wesentlichen in derselben Orientierung bei allen Positionen des zweiten Endes (14b) der Stützstruktur (8) gehalten wird, aufgrund der Befestigung der Haltevorrichtung (12) in einer im Wesentlichen nichtdrehbaren Art sowohl an der zahnärztlichen Behandlungseinheit (1), oder mit einer mit der Behandlungseinheit (1) verbundenen Struktur, sowie an dem Utensil (7).

2. Die Stützvorrichtung entsprechend Anspruch 1, **dadurch gekennzeichnet, dass** das erste Ende (14a) der Stützstruktur (8) mittels Lager mit der zahnärztlichen Behandlungseinheit (1), oder mit einer mit der Behandlungseinheit (1) verbundenen Struktur verbunden ist.

3. Die Stützvorrichtung entsprechend der Anspruche 1 oder 2, **dadurch gekennzeichnet, dass**
das Utensil (7) mittels Lager mit dem zweiten Ende (14a) der Stützstruktur (8) verbunden ist.

4. Die Stützvorrichtung entsprechend irgendeinem der vorherigen Ansprüche,
**dadurch gekennzeichnet, dass**
die Stützstruktur (8) zu einem das Utensil (7) stützenden Kurbelarm ausgeformt ist.

5. Die Stützvorrichtung entsprechend irgendeinem der vorherigen Ansprüche,
**dadurch gekennzeichnet, dass**
die Stützstruktur (8) koaxiale Teile (11,12) beinhaltet die sich zueinander verdrehen lassen, von deinen eines die Haltevorrichtung (12) einschließt.

6. Die Stützvorrichtung entsprechend irgendeinem der vorherigen Ansprüche,
**dadurch gekennzeichnet, dass**
die Stützstruktur (8) eine armartiges äußeres Armbauteil (11) aufweißt, innerhalb dessen die Haltevorrichtung (12) angebracht ist.

7. Die Stützvorrichtung entsprechend irgendeinem der vorherigen Ansprüche,
**dadurch gekennzeichnet, dass**
die Stützstruktur (8) ein äußeres armartiges Bauteil (11) mit einer im Wesentlichen kurbelartigen Struktur aufweißt, so dass das ersten und zweiten Ende (14a, 14b) des armartigen Bauteils im Wesentlichen gerade Rohrartige Abschnitte (10a, 10e), die sich parallel erstrecken und deren zentrale Achsen voneinander beanstandet angeordnet sind.

8. Die Stützvorrichtung entsprechend irgendeinem der vorherigen Ansprüche,
**dadurch gekennzeichnet, dass**
die Stützstruktur (8) ein äußeres armartiges Bauteil (11) aufweißt, das im Wesentlichen steif und rohrartig ist und das zumindest das Gewicht des Utensils (7) stützen kann.

9. Stützvorrichtung entsprechend irgendeinem der vorherigen Ansprüche,
**dadurch gekennzeichnet, dass**
die Haltevorrichtung (12) im Wesentlichen ein flexibler und Torsionsstabiler Schlauch ist, wie ein hohler Drahtgeflechtsschlauch.

10. Die Stützvorrichtung entsprechend irgendeinem der vorherigen Ansprüche,
**dadurch gekennzeichnet, dass**
die Haltevorrichtung (12) mit mindestens einer Durchführung zum Durchgang von einer Luftdruckverbindung, einem Saugschlauch, elektrischen Kabeln oder Äquivalenten von der zahnärztlichen Behandlungseinheit (1) zu dem Utensil (7) ausgestattet ist.

11. Die Stützvorrichtung entsprechend irgendeinem der vorherigen Ansprüche,
**dadurch gekennzeichnet, dass**
die Stützvorrichtung (8) ein steifes armartiges Bauteil sowie die Haltevorrichtung (12) aufweißt, welche nebeneinander angeordnet sind.

12. Die Stützvorrichtung entsprechend irgendeinem der vorherigen Ansprüche,
**dadurch gekennzeichnet, dass**
die Stützvorrichtung (8) ein steifes armartiges Bauteil (11) und die Haltevorrichtung (12) aufweißt und diese koaxial zueinander angeordnet sind, so dass das armartige Bauteil (11) innerhalb der die Haltevorrichtung (12) angebracht ist.

13. Die Stützvorrichtung entsprechend irgendeinem der vorherigen Ansprüche,
**dadurch gekennzeichnet, dass**
die Haltevorrichtung (12) eine Welle einer parallelogrammmechanismusartigen Struktur ist.

14. Stützvorrichtung entsprechend irgendeinem der vorherigen Ansprüche,
**dadurch gekennzeichnet, dass**
die Stützvorrichtung (8) ein Saugarm ist und das Utensil (7) eine Saugkonsole der zahnärztlichen Behandlungseinheit ist.

## Revendications

1. Dispositif de support (8) pour utiliser en liaison avec une unité de soins dentaires (1), ledit dispositif de support (8) comprenant une première extrémité (14a), par laquelle le dispositif de support (8) est relié à l'unité de soins dentaires (1) ou à une structure fixée sur l'unité de soins dentaires, et une seconde extrémité (14b), qui est agencée pour supporter un ustensile (7), comme une console, un plateau ou un autre accessoire correspondant, **caractérisé en ce que** ledit dispositif de support (8) comprend au niveau desdites première et seconde extrémités (14a, 14b) une partie initiale 10a et une partie finale 10e, respectivement, lesdites parties initiales et finales (10a, 10b) s'étendant parallèles et leurs axes centraux étant situés à distance l'un de l'autre, ladite première extrémité (14a) du dispositif de support (8) étant reliée à l'unité de soins dentaires (1) ou à une structure en liaison avec l'unité de soins dentaires par une structure qui permet la rotation de ladite première extrémité (14a) moyennant quoi la seconde extrémité (14b) du dispositif de support (8) peut tourner à une distance de la première extrémité (14a) dudit dispositif de support (8) par rapport au point de fixation de ladite première extrémité (14a) et à l'ustensile par une structure qui permet de la rotation de l'ustensile (7) par rapport au dispositif de support (8), et **en ce qu'**un dispositif de maintien (12) est fourni en liaison avec le dispositif de support (8), ledit dispositif de maintien (12) étant agencé pour maintenir l'ustensile (7) susmentionné dans sensiblement la même orientation dans toutes les positions de la seconde extrémité (14b) du dispositif de support (8) du fait de la fixation du dispositif de maintien (12) d'une manière sensiblement non rotative à la fois à l'unité de soins dentaires (1) ou à la structure en liaison avec l'unité de soins dentaires et à l'ustensile (7).

2. Dispositif de support selon la revendication 1, **caractérisé en ce que** la première extrémité (14a) du dispositif de support (8) est reliée à l'unité de soins dentaires (1) ou à une structure en liaison avec l'unité de soins dentaires par des paliers.

3. Dispositif de support selon la revendication 1 ou 2, **caractérisé en ce que** l'ustensile (7) susmentionné est relié à la seconde extrémité (14b) du dispositif de support (8) par des paliers.

4. Dispositif de support selon l'une quelconque des revendications précédentes, **caractérisé en ce que** le dispositif de support (8) est agencé pour former bras en manivelle supportant l'ustensile (7).

5. Dispositif de support selon l'une quelconque des revendications précédentes, **caractérisé en ce que** le dispositif de support (8) comprend des parties coaxiales (11, 12) agencées pour pouvoir tourner relativement l'une à l'autre, celle de ces parties qui est extérieure comprenant le dispositif de maintien (12) susmentionné.

6. Dispositif de support selon l'une quelconque des revendications précédentes, **caractérisé en ce que** le dispositif de support (8) comprend une partie de bras extérieure en forme de bras (11) et le dispositif de maintien (12) susmentionné est agencé à l'intérieur de celle-ci.

7. Dispositif de support selon l'une quelconque des revendications précédentes, **caractérisé en ce que** le dispositif de support (8) comprend une partie extérieure en forme de bras (11) ayant sensiblement une structure en manivelle de telle manière que les première et seconde extrémités (14, 14b) de ladite partie en forme de bras comprennent des partie en tube sensiblement droites (10a, 10e), qui s'étendent en parallèle et dont les axes centraux sont disposés à une distance l'un de l'autre.

8. Dispositif de support selon l'une quelconque des revendications précédentes, **caractérisé en ce que** le dispositif de support (8) comprend une partie extérieure en forme de bras (11) qui est une partie en forme de bras sensiblement rigide agencée pour supporter au moins le poids d'un ustensile (7).

9. Dispositif de support selon l'une quelconque des revendications précédentes, **caractérisé en ce que** le dispositif de maintien (12) susmentionné est un tuyau résistant à la torsion sensiblement flexible, comme un tuyau souple en tissu métallique creux.

10. Dispositif de support selon l'une quelconque des revendications précédentes, **caractérisé en ce que** le dispositif de maintien (12) susmentionné est pourvu d'au moins un passage pour le passage d'une ligne d'air pneumatique, d'un tuyau flexible d'aspiration, de câbles électriques ou équivalent de l'unité de soins dentaires (1) vers l'ustensile (7).

11. Dispositif de support selon l'une quelconque des revendications précédentes, **caractérisé en ce que** le dispositif de support (8) comprend une partie en forme de bras rigide et le dispositif de maintien (12) susmentionné, qui sont agencés côte à côte.

12. Dispositif de support selon l'une quelconque des revendications précédentes, **caractérisé en ce que** le dispositif de support (8) comprend une partie en forme de bras rigide (11) et le dispositif de maintien (12) susmentionné, qui sont agencés coaxialement relativement l'un à l'autre de telle manière que ladite partie en forme de bras (11) est disposée à l'intérieur du dispositif de maintien (12).

13. Dispositif de support selon l'une quelconque des revendications précédentes, **caractérisé en ce que** le dispositif de maintien (12) est un arbre d'une structure du type mécanisme à parallélogramme.

14. Dispositif de support selon l'une quelconque des revendications précédentes, **caractérisé en ce que** le dispositif de support (8) est un bras d'aspiration et l'ustensile (7) est une console d'aspiration de l'unité de soins dentaires.
